Europäisches Patentamt

European Patent Office

Office européen des brevets

(19)

(11) Veröffentlichungsnummer: **0 271 662 B1**

(12) **EUROPÄISCHE PATENTSCHRIFT**

(45) Veröffentlichungstag der Patentschrift: **15.01.92**

(21) Anmeldenummer: **87115005.8**

(22) Anmeldetag: **14.10.87**

(51) Int. Cl.⁵: **B05B 12/00**, B05B 9/047, G01F 11/08

(54) **Einrichtung zum Dosierten Ausspritzen viskoser Medien.**

(30) Priorität: **17.12.86 DE 8633673 U**

(43) Veröffentlichungstag der Anmeldung:
**22.06.88 Patentblatt 88/25**

(45) Bekanntmachung des Hinweises auf die
Patenterteilung:
**15.01.92 Patentblatt 92/03**

(84) Benannte Vertragsstaaten:
**BE DE ES FR GB IT NL SE**

(56) Entgegenhaltungen:
**DE-A- 3 134 911**
**FR-A- 2 255 586**
**GB-A- 1 022 104**
**US-A- 4 594 057**

(73) Patentinhaber: **VEGLA Vereinigte Glaswerke GmbH**
**Viktoriaallee 3-5**
**W-5100 Aachen(DE)**

(72) Erfinder: **Cornils, Gerd**
**Dechant-Fabry-Str.48**
**W-5161 Merzenich-Girbelsrath(DE)**

(74) Vertreter: **Liermann, Manfred**
**Schillingsstrasse 335**
**W-5160 Düren(DE)**

# Beschreibung

Die Erfindung betrifft ein Einrichtung zum dosierten Ausspritzen viskoser Medien mit mindestens einer entlang einer vorgegebenen Bahn bewegbaren Ausspritzdüse und einem Vorratsbehälter mit einer Trennung zwischen Vorrats- und Verdrängungsseite, der mit einer Fülleinrichtung und einer Verdrängungseinrichtung verbunden ist, wobei die Verdrängungsmenge pro Zeit oder Weg mittels der Verdrängungseinrichtung bestimmbar ist.

Einrichtungen der oben beschriebenen Art sind vom Anmelder selbst gebaut und in Verkehr gebracht worden. Sie werden eingesetzt beispielsweise zur Aufbringung streifenförmiger Beschichtungen an Bauteilen, wie z. B. zum Aufbringen des Dichtrandes an Kraftfahrzeugwindschutzscheiben. Solche Einrichtungen haben sich für den genannten Zweck in der Praxis durchaus gut bewährt. Es wird bei diesen Einrichtungen von einem einarmigen, ortsfesten Manipulator eine Ausspritzdüse entlang einer vorgegebenen Bahn verfahren und hierbei gleichzeitig aus der Ausspitzdüse das in aller Regel hochviskose Material ausgespritzt. Da das auszuspritzende Material sehr genau dosiert werden muß und hierbei die Geschwindigkeit der Ausspritzdüse entlang der vorgegebenen Bahn beachtet werden muß, ist der Einsatz einer kontrollierbaren Dosiereinrichtung notwendig. Diese Dosiereinrichtung besteht im Stand der Technik aus einem zylinderförmigen Behälter mit einem darin angeordneten, verschiebbaren Kolben. Dieser zylinderförmige Behälter wird aus einem Vorratsfaß, welches das auszuspritzende Medium enthält, über eine Leitung mittels einer Faßpumpe gefüllt, wobei der genannte Kolben ausgetrieben wird. Der genannte Zylinderraum ist ebenfalls - hierzu sind entsprechende Wegeventile vorgesehen - über eine großzügig bemessene, flexible Schlauchleitung mit der Ausspritzdüse verbunden. Ist der Zylinder über die entsprechende Wegeventilschaltung auf die Ausspritzdüse geschaltet, so kann über eine von einem Elektromotor bewegte Gewindespindel der Kolben wieder in den Zylinder eingedrückt und hierdurch das dort vorhandene Medium über die genannte flexible Schlauchleitung zur Ausspritzdüse transportiert und dort ausgespritzt werden. Über die Geschwindigkeit der Gewindespindel ist die auszuspritzende Menge dosierbar. Hierbei ist die Geschwindigkeit der Gewindespindel problemlos und präzise regelbar. Dennoch bleibt bei den Einrichtungen des Standes der Technik die präzise Dosierung insbesondere bei Geschwindigkeitsänderungen, beispielsweise dann, wenn die Ausspritzdüse von der geraden in eine kurvenförmige Bahn wechselt, schwierig, weil sich herausgestellt hat, daß Geschwindigkeitsänderungen an der die Auspressung bewirkenden Gewindespindel oder äquivalenter Elemente sich nur verzögert in einer Veränderung der ausgespritzten Masse pro Zeit auswirken. Die Größe dieser Verzögerung muß daher festgestellt werden für jeden einzelnen, vorbestimmten, von der Ausspritzdüse abzufahrenden Wegtypzyklus. Hierbei ist die genannte Verzögerung zusätzlich abhängig von der Viskosität des auszuspritzenden Mediums.

Der Erfindung liegt damit die Aufgabe zugrunde, eine Einrichtung der eingangs beschriebenen Art vorzuschlagen, die die beschriebenen Dosierunsicherheiten nicht mehr aufweist.

Erfindungsgemäß ist diese Aufgabe dadurch gelöst, daß Ausspritzdüse und Vorratsbehälter starr miteinander verbunden sind, wobei die Verdrängungseinrichtung einen beweglichen, betätigbaren Verdrängungskörper aufweist, wobei der Raum zwischen Verdrängungskörper einerseits und der von der Trennung begrenzten Verdrängungsseite des Vorratsbehälters andererseits mit einem im wesentlichen inkompressiblen Medium gefüllt ist und daß zwischen Ausspritzdüse und Vorratsbehälter ein Füllventil angeordnet ist, das je nach Schaltzustand den Vorratsbehälter mit der Fülleinrichtung oder mit der Ausspritzdüse verbindet, wobei Ausspritzdüse, Füllventil und Vorratsbehälter eine Dosiereinheit bilden, die mit einer Transporteinrichtung verbunden oder verbindbar ist und wobei die Dosiereinheit über flexible Leitungen einerseits mit der Fülleinrichtung und andererseits mit der Verdrängungseinrichtung verbunden ist. Dadurch, daß Ausspritzdüse und Vorratsbehälter starr miteinander verbunden ist, entfällt der lange flexible Schlauch zwischen beiden Bauteilen, so daß die entsprechende Elastizität des Schlauches sowie die lange teilkompressible Säule des viskosen Mediums vermieden werden kann. Das auszuspritzende Medium liegt jetzt unmittelbar vor der Ausspritzdüse im Vorratsbehälter und muß daher aus diesem verdrängt werden. Der Vorratsbehälter hat daher auch hier wieder eine Trennung, wodurch im Vorratsbehälter die Vorratsseite von der Verdrängungsseite getrennt wird. Um die Einrichtung möglichst leicht und damit handhabbar zu halten, ist die Verdrängungsseite mit einem flexiblen Schlauch mit einer Verdrängungseinrichtung verbunden, die einen beweglichen und betätigbaren Verdrängungskörper aufweist. Der genannte Raum zwischen Verdrängungskörper über die genannte Schlauchleitung bis zur Verdrängungsseite des Vorratsbehälters ist mit inkompressiblem Medium, z.B. Hydrauliköl, gefüllt. Wird nun der Verdrängungskörper betätigt, so verdrängt er das genannte Hydrauliköl, das als praktisch inkompressibel angenommen werden kann, und es wird durch diese Verdrängung die Trennung in dem Vorratsbehälter verschoben und hierdurch aus dem Vorratsbehälter das auszuspritzende viskose Medium durch die Ausspritzdüse ausgetrieben. Da das Hydrauliköl und der flexible Schlauch für das Hydrauliköl eine inkompressible Säule bilden, kann davon ausgegangen werden, daß exakt so viel Raum im Vorratsbehälter verdrängt wird, wie auch von dem betätigbaren Verdrängungskörper verdrängt wird. Da eine Verdrängungsbewegung des Verdrängungskörpers wegen der inkompressiblen Hydraulikölsäule verzögerungsfrei zum Vorratsbehälter weitergeleitet wird, tritt bei einer Veränderung der Bewegungsgeschwindigkeit des Verdrängungskörpers nahezu verzögerungsfrei eine Veränderung der ausgespritzten Masse pro Zeiteinheit ein. Die bisher so unangenehme Verzögerung ist damit vermieden. Außerdem ist eine einfache Möglichkeit gegeben, eine rasche und automatische Nachfüllung zu bewirken. Weiterhin entsteht eine gut greifbare und bewegbare Einheit, die überall aufgenommen, bewegt und wieder abgelegt werden kann. Die Flexibilität der Einrichtung wird hierdurch drastisch erhöht. Insbesondere wird es nunmehr möglich, mehrere solcher Dosiereinheiten in unterschiedlichem Füllzustand oder mit unterschiedlichem Medium für unterschiedliche Aufgaben jeweils bereit zu halten für die genannte Transporteinrichtung. Außerdem kann ohne Zeitverzögerung jederzeit eine Nachfüllung erfolgen.

Eine andere Ausgestaltung der Erfindung sieht vor, daß die Verdrängungseinrichtung einen Strömungsmittelzylinder aufweist, mit mindestens einem beweglichen Kolben als Verdrängungskörper. Dies ist eine konstruktiv besonders einfache Realisierungsmöglichkeit einer Einrichtung zum verzögerungsfreien Verdrängen des auszuspritzenden Mediums aus dem Vorratsbehälter.

Eine ergänzende Ausgestaltung der Erfindung sieht vor, daß der Strömungsmittelzylinder mindestens eine mit dem Kolben verbundene Kolbenstange aufweist zur Abtastung des Verdrängungsweges des Kolbens und/oder zur Verbindung mit einem Verschiebemotor. Hierdurch kann das Verdrängungsvolumen und/oder eine Verdrängungsgrenzlage leicht erfaßt werden. Die Kolbenstange kann hierbei auch z. B. zusätzlich zur Verbindung beispielsweise mit einer von einem Elektromotor angetriebenen Kugelrollspindel verwendet werden, mit der Dosierweg und Dosiergeschwindigkeit bestimmt werden sollen.

In weiterer Ausgestaltung ist nach der Erfindung vorgeschlagen, daß der der Verdrängerseite abgewandte Zylinderraum über ein Mengenregelventil mit einer Strömungsmittelpumpe verbunden ist. Dies ist eine alternative Form den Verdrängungsantrieb zu bewirken, die ebenfalls einfach im Aufbau und leicht beherrschbar ist.

Eine andere Ausgestaltung der Erfindung sieht vor, daß der Vorratsbehälter als handelsüblicher Druckspeicher mit zwei Kammern ausgebildet ist, dessen eine Kammer die Verdrängungsseite und dessen andere Kammer die Vorratsseite bildet. Es hat sich gezeigt, daß handelsübliche Druckspeicher sich als Vorratsbehälter für den hier vorgesehenen Zweck ausgezeichnet eignen. Sie weisen von ihrer Bauart her bereits eine innere flexible Membran auf und enthalten damit bereits die notwendige Trennung zwischen Vorratsseite und Verdrängungsseite. Da solche Druckspeicher auch für Hydraulikflüssigkeiten ausgelegt sind, ist der Einsatz von Hydrauliköl auf der Verdrängerseite völlig unproblematisch. Sie weisen außerdem trotz ihrer in der Regel sehr leichten Bauart die notwendige Druckfestigkeit auf und sind sehr preiswert.

Ergänzend ist dann nach der Erfindung vorgeschalgen, daß das verdrängbare Volumen des Vorratsbehälters dem Bedarf für einen Arbeitszyklus entspricht. Da nach der Bauart der neuerungsgemäßen Einrichtung eine rasche Nachfüllung des Vorratsbehälters möglich ist, ist die Begrenzung des Volumens des Vorratsbehälters auf den Bedarf für einen Arbeitszyklus sinnvoll, weil hierdurch unnötiges, zu transportierendes Gewicht vermieden wird.

Schließlich ist nach der Erfindung noch vorgeschlagen, daß als Transporteinrichtung ein stationärer Manipulator verwendet ist. Solche Manipulatoren, zum Teil aush mit der Bezeichnung "Roboter" belegt, sind vielfach in der Industrie bereits im Einsatz. Sie weisen die notwendige Bewegungsfähigkeit und die hier notwendige Tragfähigkeit auf. Lediglich ihre Greiforgane müssen an den zu greifenden Vorratsbehälter angepaßt sein.

Die Erfindung soll nun anhand der beigefügten Zeichnungen, die ein Ausführungsbeispiel zeigen, näher erläutert werden.

Es zeigen:

Figur 1: Schemaskizze des Aufbaus der neuerungsgemäßen Einrichtung

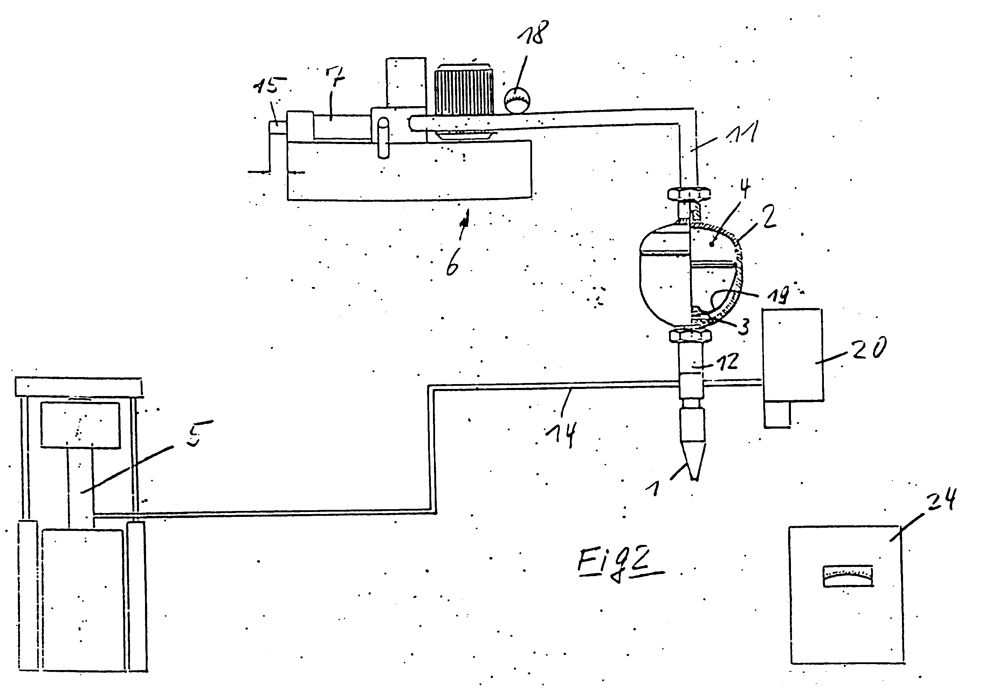

Figur 2: Darstellung wie Figur 1, jedoch unter Verwendung der tatsächlichen körperlichen Gestalt der einzelnen Baugruppen.

Figur 3: Perspektivisch Gesamtansicht einer neuerungsgemäßen Einrichtung

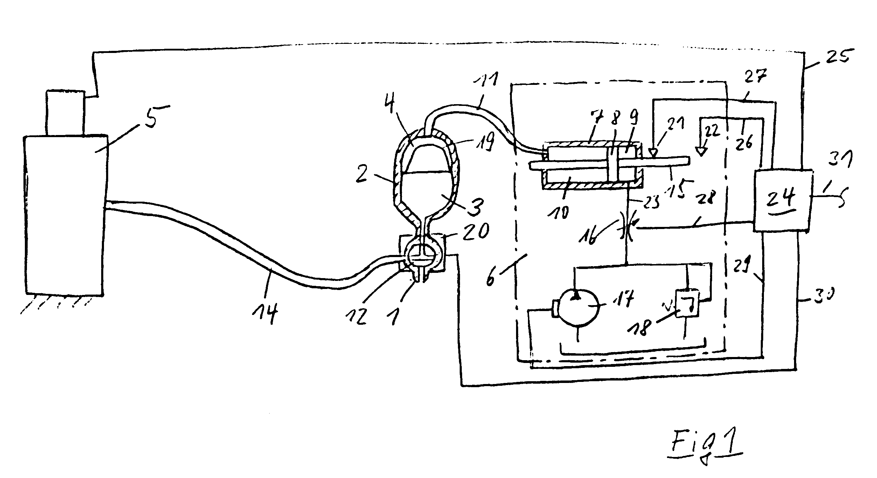

Figur 1 zeigt einen Vorratsbehälter 2, bei dem eine Verdrängungsseite 4 von einer Vorratskammer 3 durch eine Membran 19 getrennt ist. Die Kammer 3 mündet mit ihrem Ausgang in ein Füllventil 12, das als sog. Dreiwegeventil ausgebildet und von einer Betätigungseinrichtung 20 betätigbar ist. Dem Füllventil schließlich schließt sich die Ausspritzdüse 1 an.

Das Füllventil 12 ist weiter über eine flexible Leitung 14 mit einer Fülleinrichtung 5, in der Regel eine sog. Faßpumpe, die an ein Vorratsfaß angeordnet ist, verbunden. In der in Figur 1 dargestellten Stellung des Füllventils 12 kann die Fülleinrichtung 5 über die flexible Leitung 14 die Kammer 3 des Vorratsbehälters 2 füllen. Wird das Füllventil 12 aus der in Figur 1 dargestellten Anordnung um 90° nach rechts geschwänkt, so ist die Fülleinrichtung 5 gesperrt und der Weg aus der Kammer 3 zur Ausspritzdüse 1 frei.

Die Verdrängungsseite 4 des Vorratsbehälters 2 ist über eine flexible Leitung mit der Kammer 10 eines Strömungsmittelzylinders 7 verbunden. Kammer 10 und eine weitere Kammer 9 sind getrennt durch einen Kolben 8. Kolben 8 ist verbunden mit einer doppelten Kolbenstange, dessen eine Kolbenstange 15 beispielsweise zusammenwirkt mit zwei Endschaltern 21 und 22. Die Endschalter 21 und 22 können beispielsweise Grenzlagen für die Verdrängungsmenge darstellen.

Zur Betätigung des Kolbens 8 ist die Kammer 9 über eine Leitung 23 in der ein Mengenregelventil 16 angeordnet ist, mit einer Strömungsmittelpumpe 17 verbunden. Das System ist gegen Überdruck abgesichert durch das Druckbegrenzungsventil 18.

Der Funktionsblauf der einzelnen Einrichtungen wird über eine Steuerung 24 koordiniert, sichergestellt und abgewickelt. Die Endschalter 21 und 22 sind hierzu mittels der Leitungen 26 und 27 mit der Steuerung 24 verbunden. Ebenso ist das Mengenregelventil bzw. dessen Stelleinrichtung über die Leitung 28 mit der Steuerung 24 verbunden. Hierdurch kann die richtige Dosiergeschwindigkeit eingehalten und die jeweils festgelegten Grenzlagen ermittelt werden. So kann dies bedeuten, daß bei Befahren des Endschalters 21 - diese Information wird über die Leitung 27 an die Steuerung 24 gegeben - die Strömungsmittelpumpe 17 über die Steuerleitung 29 abgeschaltet und über die Steuerleitung 30 und die Betätigungseinrichtung 20 das Füllventil 12 in die in Figur 1 dargestellte Füllage gefahren wird. Die Faßpumpe treibt dann das auszeuspritzende Medium in die Vorratskammer 3 und treibt damit auf der Verdrängungsseite 4 das Hydrauliköl über die flexible Leitung 11 wieder zurück in die Kammer 10 des Strömungsmittelzylinders 7, wodurch der Kolben 8 wieder nach rechts getrieben und die Kolbenstange 15 ausgefahren wird. Das aus der Kammer 9 verdrängte Öl kann entweder über eine nicht dargestellte separate Schaltung drucklos in den Tank geführt werden, oder aber durch eine in dem Mengenregelventil 16 üblicherweise vorhandene Umgehung, oder auch durch das Mengenregelventil 16 zurück und über das Druckbegrenzungsventil 18 zum Tank geführt sein. Hierzu könnte das Druckbegrenzungsventil 18 auch automatisch so regelbar sein, daß für den Rückhub die Druckbegrenzung sehr niedrig gestellt wird. Solche Schaltungen aber sind an sich bekannt und nicht Gegenstand der Erfindung.

Wird nun der Endschalter 22 befahren, so kann die Steuerung 24 über die Leitung 25 die Fülleinrichtung wieder abschalten und über die Leitung mittels der Betätigungseinrichtung 20 das Füllventil 12 wieder um 90° in die Ausspritzposition drehen. Hat nun die Transporteinrichtung 13 den Vorratsbehälter 2 mit der Ausspritzdüse 1 in die Anfangsposition gefahren, so kann diese über die Leitung 31 ein Signal zur Steuerung 24 abgeben, die daraufhin die Strömungsmittelpumpe 17 wieder einschaltet und eine bedarfsgerechte Mengenregelung am Mengenregelventil 16 bewirkt.

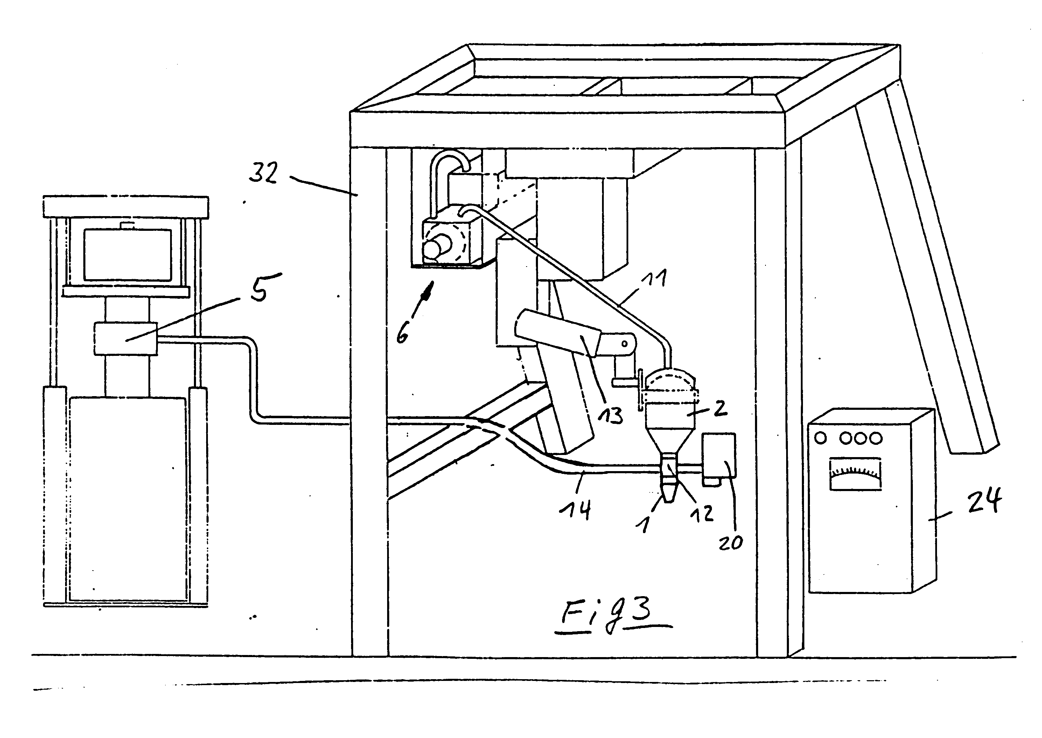

Die im wesentlichen aus dem Strömungsmittelzylinder 7 mit den zugehörigen Betätigungseinrichtungen, wie der Strömungsmittelpumpe 17 und dem Druckbegrenzungsventil 18 sowie dem Mengenregelventil 16 bestehende Verdrängungseinrichtung 6, ist als Baugruppe zusammengefaßt und kann in einem Ständer 32, wie dies Figur 3 zeigt, angeordnet sein. Am gleichen Ständer kann an einer Anordnung wie in Figur 3 dargestellt, die Transporteinrichtung 13 in der Form eines einarmigen Manipulators angeordnet sein. Neben dem Ständer 32 ist die Fülleinrichtung 5 mit dem Vorratsfaß und der zugehörigen Faßpumpe angeordnet, die mittels der flexiblen Leitung 14 mit dem Vorratsbehälter 2 verbunden ist. Der in Figur 3 noch dargestellte Schaltschrank kann die Steuerung 24 umfassen, aber auch zusätzlich z. B. noch einen Rechner und Programiereinrichtungen für eine Wegprogramierung des Manipulators 13.

Es ist insgesamt gelungen einen sehr einfachen Aufbau einer solchen Einrichtung zu erreichen und gleichzeitig die bisherigen Dosierschwierigkeiten zu beseitigen.

**Patentansprüche**

1. Einrichtung zum dosierten Ausspritzen viskoser Medien mit mindestens einer entlang einer vorgegebenen Bahn bewegbaren Ausspritzdüse (1) und einem Vorratsbehälter (2) mit einer Trennung zwischen Vorrats- (3) und Verdrängungsseite (4), der mit einer Fülleinrichtung (5) und einer Verdrängungseinrichtung (6) verbunden ist, wobei die Verdrängungsmenge pro Zeit oder Weg mittels der Verdrängungseinrichtung (6) bestimmbar ist, dadurch gekennzeichnet, daß Ausspritzdüse (1) und Vorratsbehälter (2) starr miteinander verbunden sind, wobei die Verdrängungseinrichtung (6) einen beweglichen, betätigbaren Verdrängungskörper (8) aufweist, wobei der Raum zwischen Verdrängungskörper (8) einerseits und der von der Trennung begrenzten Verdrängungsseite des Vorratsbehälters (2) andererseits mit einem im wesentlichen inkompressiblen Medium gefüllt ist und daß zwischen Ausspritzdüse (1) und Vorratsbehälter (2) ein Füllventil (12) angeordnet ist, das je nach Schaltzustand den Vorratsbehälter (2) mit der Fülleinrichtung (5) oder mit der Ausspritzdüse (1) verbindet, wobei Ausspritzdüse (1), Füllventil (12) und Vorratsbehälter (2) eine Dosiereinheit bilden, die mit einer Transporteinrichtung (13) verbunden oder verbindbar ist und wobei die Dosiereinheit (1,2,12) über flexible Leitungen (11,14) einerseits mit der Fülleinrichtung (5) und andererseits mit der Verdrängungseinrichtung (6) verbunden ist.

2. Einrichtung mindestens nach Anspruch 1, dadurch gekennzeichnet, daß die Verdrängungseinrichtung (6) einen Strömungsmittelzylinder (7) aufweist, mit mindestens einem beweglichen Kolben (8) als Verdrängungskörper.

3. Einrichtung mindestens nach Anspruch 2, dadurch gekennzeichnet, daß der Strömungsmittelzylinder (7) mindestens eine mit dem Kolben (8) verbundene Kolbenstange (15) aufweist zur Abtastung des Verdrängungsweges des Kolbens und/oder zur Verbindung mit einem Verschiebemotor.

4. Einrichtung mindestens nach Anspruch 3, dadurch gekennzeichnet, daß der der Verdrängerseite abgewandte Zylinderraum (9) über ein Mengenregelventil (16) mit einer Strömungsmittelpumpe verbunden ist.

5. Einrichtung nach mindestens einem der Ansprüche 1 bis 4, dadurch gekennzeichnet, daß der Vorratsbehälter (2) als handelsüblicher Druckspeicher mit zwei Kammern (4,18) ausgebildet ist, dessen eine Kammer (4) die Verdrängungsseite und dessen andere Kammer (3) die Vorratsseite bildet.

6. Einrichtung nach mindestens einem der Ansprüche 1 bis 5, dadurch gekennzeichnet, daß das verdrängbare Volumen des Vorratsbehälters (2) dem Bedarf für einen Arbeitszyklus entspricht.

7. Einrichtung mindestens nach Anspruch 1, dadurch gekennzeichnet, daß als Transporteinrichtung (13) ein stationärer Manipulator verwendet ist.

**Claims**

1. Equipment for the metered ejection of viscous media with at least one ejection nozzle (1), which is movable along a preset path, and a stock container (2), which has a partition between stock side (3) and displacement side (4) and is connected with a filling equipment (5) and a displacing equipment (6), wherein the quantity displaced for each unit of time or travel is determinable by means of the displacing equipment (6), characterised thereby, that the ejection nozzle (1) and the stock container (2) are rigidly connected together, wherein the displacing equipment (6) displays a movable actuable displacing body (8), wherein the space between the displacing body (8) on the one hand and the displacement side, which is bounded by the partition, of the stock container (2) on the other hand is filled with a substantially incompressible medium and that a filling valve (12), which according to switching state connects the stock container (2) either with the filling equipment (5) or with the ejection nozzle (1), is arranged between the ejection nozzle (1) and the stock container (2), wherein the ejection nozzle (1), the filling valve (12) and the stock container (2) form a metering unit which is connected or connectable with a transport equipment (13) and wherein the metering unit (1, 2, 12) is connected by way of flexible ducts (11, 14) on the one hand with the filling equipment (5) and on the other hand with the displacing equipment (6).

2. Equipment according to at least claim 1, characterised thereby, that the displacing equipment (6) displays a flow medium cylinder (7) with at least one movable piston (8) as displacing body (8).

3. Equipment according to at least claim 2, characterised thereby, that the flow medium cylinder (7) displays at least one piston rod (15), which is connected with the piston (8), for the sensing of the displacement travel of the piston and/or for connection with a displacing motor.

4. Equipment according to at least claim 3, characterised thereby, that the cylinder space (9), which is remote from the displacing side, is connected by way of a quantity-regulating valve (16) with a flow medium pump.

5. Equipment according to at least one of the claims 1 to 4, characterised thereby, that the stock container (2) is constructed as commercially usual pressure store with two chambers (4, 18), one chamber (4) of which forms the displacement side and the other chamber (3) of which forms the stock side.

6. Equipment according to at least one of the claims 1 to 5, characterised thereby, that the displaceable volume of the stock container (2) corresponds to the requirement for one operating cycle.

7. Equipment according to at least claim 1, characterised thereby, that a stationary manipulator is used as transport equipment (13).

**Revendications**

1. Dispositif servant à éjecter une quantité dosée d'un fluide visqueux, comportant au moins un ajutage d'éjection (1) pouvant être déplacé suivant un trajet prédéterminé et un réservoir (2) présentant une séparation entre le côté d'alimentation (3) et le côté de refoulement (4), qui est raccordé à un dispositif de remplissage (5) et à un dispositif de refoulement (6), le volume de refoulement par unité de temps ou de trajet pouvant être déterminé par le dispositif de refoulement (6), caractérisé en ce que l'ajutage d'éjection (1) et le réservoir (2) sont raccordés rigidement l'un à l'autre, le dispositif de refoulement (6) comportant un corps de refoulement mobile (8) pouvant être actionné et l'espace entre le corps de refoulement (8), d'une part, et le côté de refoulement du réservoir (2) délimité par la séparation, d'autre part, étant rempli d'un fluide en substance incompressible, et que, entre l'ajutage d'éjection (1) et le réservoir (2) est prévue une valve de remplissage (12), qui, selon sa position de raccordement, raccorde le réservoir (2) au dispositif de remplissage (5) ou à l'ajutage d'éjection (1), étant entendu que l'ajutage d'éjection (1), la valve de remplissage (12) et le réservoir (2) forment une unité de dosage qui est ou peut être raccordée à un dispositif transporteur (13) et que l'unité de dosage (1, 2, 12) est raccordée par des tuyaux flexibles (11, 14), d'une part au dispositif de remplissage (5) et, d'autre part au dispositif de refoulement (6).

2. Dispositif suivant la revendication 1, caractérisé en ce que le dispositif de refoulement (6) comporte un cylindre hydraulique (7), équipé d'au moins un piston mobile (8) à titre de corps de refoulement.

3. Dispositif suivant la revendication 2, caractérisé en ce que le cylindre hydraulique (7) comporte au moins une tige de piston (15) reliée au piston (8) pour le contrôle du trajet de refoulement du piston et/ou pour la liaison à un moteur à induit coulissant.

4. Dispositif suivant la revendication 3, caractérisé en ce que l'espace cylindrique (9) opposé au côté de refoulement est raccordé à une pompe à fluide hydraulique par un régulateur de débit (16).

5. Dispositif suivant au moins l'une quelconque des revendications 1 à 4, caractérisé en ce que le réservoir (2) a la forme d'un accumulateur hydraulique de type classique à deux chambres (4, 18), dont l'une forme le côté de refoulement (4) et l'autre, le côté d'alimentation (3).

6. Dispositif suivant au moins l'une quelconque des revendications 1 à 5, caractérisé en ce que le volume du réservoir (2) pouvant être refoulé correspond aux besoins d'un cycle de travail.

7. Dispositif suivant au moins la revendication 1, caractérisé en ce qu'un manipulateur fixe est utilisé à titre de dispositif transporteur (13).

Fig 1

EP 0 271 662 B1

Fig 2

Fig 3